# EUROPEAN PATENT SPECIFICATION

(11) **EP 0 989 029 B1**
(45) Date of publication and mention of the grant of the patent: **27.10.2004**
(21) Application number: 99202754.0
(22) Date of filing: 26.08.1999
(51) Int. Cl.: B60R 9/06, B60R 9/10

(54) **Clamping device placeable on a cycle carrier**
Auf einem Fahrradträger aufstellbare Klemmvorrichtung
Dispositif pour serrer, posable à un support de bicyclette

(30) Priority: 23.09.1998 NL 1010162
(43) Date of publication of application: 29.03.2000
(73) Proprietor: Publiekrechtelijk Overheidslichaam Felua Groep, 7334 AC Apeldoorn (NL)
(72) Inventor: Visch, Herman, 8162 ZP Epe (NL); Vreeling, Gerhardus Nicolaas, 7391 PL Twello (NL)
(74) Representative: Dokter, Hendrik Daniel

(56) References cited:
- AU-B- 641 615
- DE-A- 3 912 692
- FR-A- 1 518 528
- FR-A- 2 505 751
- FR-A- 2 689 468
- US-A- 4 702 401

## Description

The invention relates to a clamping device for a cycle according to the preamble of claim 1.

Such a clamping device is known from the German patent application no. DE 3912692 A1.

The known clamping device is intended to enable the placing and fixing of a cycle on the roof rack of a vehicle.

The known clamping device mainly comprises a central bar, meant to extend in lenghtwise direction of a vehicle over two transverse bars of a roof rack, provided with cycle holders and a pivotably connected post for clamping a frame tube extending between the front fork and the crank axle housing of a cycle. This clamping device is not suited for clamping a cycle to be placed and fixed on a cycle carrier to be fixed on a towing hook of a motor vehicle.

The French patent FR-A-1 518 528 discloses a cycle carrier to be placed on the roof of a vehicle, provided with slidable cycle holders and a vertically extending fixed post for clamping a cycle to be placed upon this cycle carrier. As this vertically extending post is fixed, it is not possible to place it on a horizontal surface, without placing the whole cycle carrier to which it is fixed on this surface.

Known from the European patent application EP 0666197 A1 is a clamping device for a cycle on a cycle carrier fixable to a towing hook of a motor vehicle, comprising a post which is placeable on this cycle carrier and which is provided with clamping means for clamping a cycle. The clamping parts of the known clamping device are in principle only suitable for clamping cranks which lie at the same angle (for traditional types of cycle a right angle) relative to the crank axle. A clamping device for clamping a crank lying at a right angle relative to a crank axle is in principle unsuitable, or at least less suitable, for clamping a crank which extends slightly outward from the crank axle to the pedal, which is the case for cranks in determined types of sport and touring cycle.

It is an object of the invention to provide a clamping device for a cycle such that clamping of a cycle therein can be carried out in simple and rapid manner by a user, wherein it is not necessary to manoeuvre accurately with a lifted cycle.

It is a further object to provide a clamping device which is suitable for clamping any type of cycle, irrespective of the shape of the crank of that cycle.

These objectives are achieved with a clamping device according to claim 1.

A clamping device according to the invention makes it possible to clamp a cycle while this cycle is parked close to a car with the relevant cycle carrier, and to then carry the clamping device with clamped cycle in one smooth movement to a position above the cycle carrier and to couple the post of the clamping device to this cycle carrier.

A clamping device wherein the clamping means are arranged round the frame tube between saddle pillar and crank axle housing provides an exceptionally stable clamping of a cycle because in most usual types of cycle the centre of gravity of a cycle coincides with a point along said frame tube.

In an embodiment the post is provided on its underside with an elongate guide element which in the clamped situation extends in longitudinal direction of a cycle and which is provided on at least its outer ends with wheel channel parts for receiving the respective wheels of a cycle for clamping.

The wheel channel parts form part for instance of one elongate channel, which has in longitudinal direction a flat profile or (in order to enhance the stability of a clamped cycle) a convex profile directed toward the cycle for clamping.

In a simple embodiment the guide element comprises two hollow transverse arms extending from the post for slidably receiving therein of respective extension pieces each bearing a wheel channel part on their free outer end.

When a clamping device according to the invention is placed on a horizontal surface, it rests on a component suitable for this purpose, for instance the underside of the guide element.

The clamping device is preferably provided with at least one foot which can support on a horizontal surface and which is more preferably provided with a plate-like part which can support on a horizontal surface and extends transversely of this foot. In the latter case a user can enhance the stability of the clamping device in simple manner during clamping of a cycle by standing with one leg on the plate-like part.

The invention will be elucidated in the following on the basis of embodiments and with reference to the annexed drawings.

In the drawings:
Fig. 1 shows in perspective rear view a simplified sketch of a cycle carrier for a car, on which a cycle is placed in a clamping device according to the invention, and
Fig. 2 shows in perspective side view the clamping device shown in fig. 1.

Corresponding components will be designated hereinbelow with the same reference numerals.

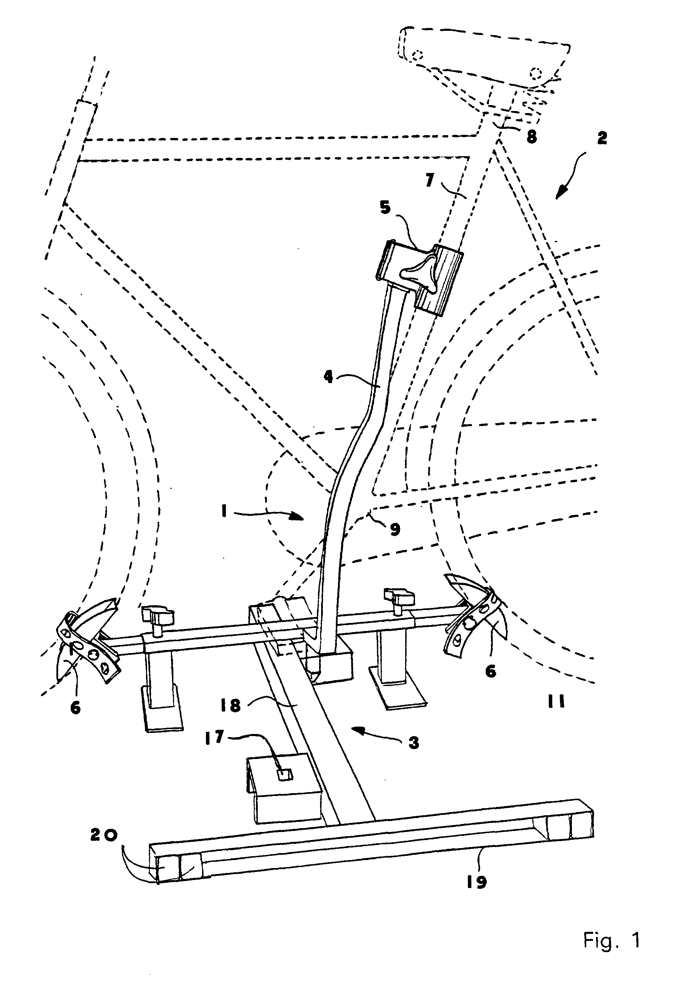

Fig. 1 shows a part of a removable cycle carrier 3 which is formed by a central beam 18, on the rear side of which is fixed a lighting fitting 19 in which are integrated the lights 20 required for a car and a number plate (not shown), and which is coupled on its front side (not shown) to the towing hook of a motor vehicle. Placed on the central beam 18 is a clamping device 1 with which a cycle 2 (partially shown in dashed lines) is clamped at three location, i.e. round frame tube 7 between saddle pillar 8 and crank axle housing 9 using a clamp 8 and round both wheels 11 using straps 21 which are trained over the respective wheel channels 6 and the part of the respective wheels 11 received therein. In addition, the figure shows a further opening 17 in cycle carrier 3 for receiving the bottom end of post 4 of clamping device 1.

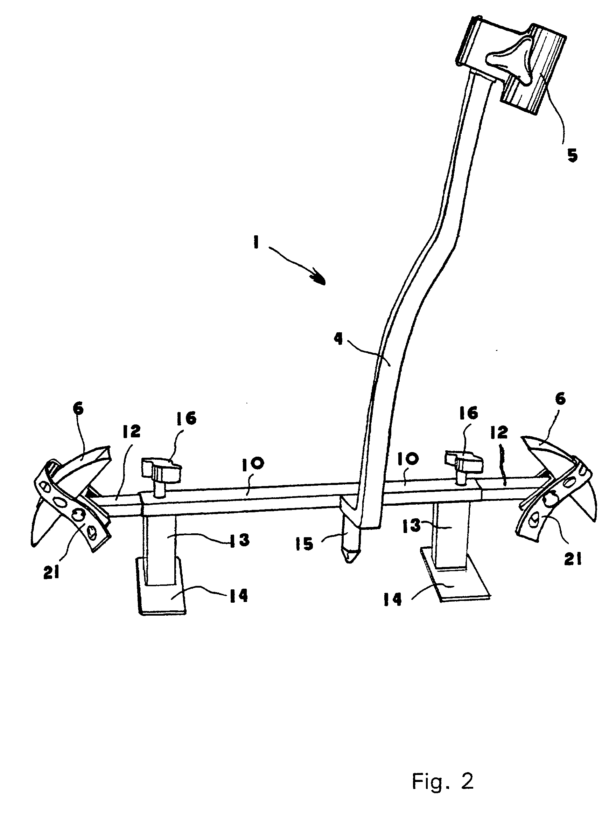

Fig. 2 shows clamping device 1 in detail in a situation where it is placed on a flat surface. In addition to the above mentioned components, the figure shows two hollow transverse arms 10 extending from post 4 for slidably receiving therein respective extension pieces 12 each bearing a wheel channel 6 on their free outer end, the mutual distance between which can be fixed using locking screws 16 after adjustment, two feet 13 provided with a base plate 14 and an extension piece 15 of post 4 which protrudes under transverse arms 10 and which is intended to be received in one of the receiving openings 17 which are formed for this purpose in the present embodiment adjacently of and in other embodiments in central beam 18 of cycle carrier 3.

It is noted that the described embodiment serves to elucidate the invention, not to limit the scope thereof.

The clamping device according to the invention is not only suitable for clamping a cycle onto a cycle carrier fixable to a towing hook of a motor vehicle but, in combination with a component suitable for this purpose, can for instance also be applied in simple manner for receiving the post in a cycle parking area, on a camp-site or on a cycle carrier on the roof structure of a car.

## Claims

1. Clamping device (1) for a cycle (2), comprising a post (4) which is provided with clamping means (5, 6) for clamping the cycle (2), the clamping means comprising a clamping body (5) for arranging round a frame tube (7) of the cycle (2) for clamping, which clamping device (1) is placeable on a horizontal surface, and which clamping means (5, 6) are adapted to clamp the cycle (2) in the clamping device (1) in a situation where the device is placed on a horizontal surface, **characterized in that**
the post (4) can releasably be coupled on a cycle carrier (3) by means of a downward extending, elongate end part (15) to allow receiving of this end part (15) in a receiving opening (17) formed for this purpose in the cycle carrier (3), the cycle carrier (3) being fixable to a towing hook of a motor vehicle, and **in that**
said clamping body (5) is arrangeable round a frame tube (7) extending between the saddle pillar (8) and the crank axle housing (9) of the cycle (2).

2. Clamping device (1) as claimed in claim 1, **characterized in that** the post (4) is provided on its underside with an elongate guide element (10) which in the clamped situation extends in longitudinal direction of a cycle (2) and which is provided on at least its outer ends with wheel channel parts (6) for receiving the respective wheels (11) of a cycle (2) for clamping.

3. Clamping device (1) as claimed in claim 2, **characterized in that** the guide element comprises two hollow transverse arms (10) extending from the post for slidably receiving therein of respective extension pieces (12) each bearing a wheel channel part (6) on their free outer end.

4. Clamping device (1) as claimed in any of the foregoing claims, **characterized in that** it is provided with at least one foot (13) which can support on a horizontal surface.

5. Clamping device (1) as claimed in claim 4, **characterized in that** the at least one foot (13) is provided with a plate-like part (14) which can support on a horizontal surface and extends transversely of this foot (13).

## Patentansprüche

1. Klemmvorrichtung (1) für ein Fahrrad (2), die einen Ständer (4) umfasst, der mit Klemmmitteln (5, 6) zum Einklemmen des Fahrrads (2) versehen ist, und die Klemmmittel umfassen einen um ein Rahmenrohr (7) des einzuklemmenden Fahrrads (2) anzubringenden Klemmkörper (5), und die Klemmvorrichtung (1) kann auf eine horizontale Oberfläche gestellt werden, und die Klemmmittel (5, 6) sind ausgerüstet um das Fahrrad (2) in der Klemmvorrichtung (1) in einer Situation, in der die Vorrichtung auf eine horizontale Oberfläche gestellt ist, einzuklemmen, **dadurch gekennzeichnet, dass**
der Ständer (4) an einen Fahrradträger (3) mit Hilfe von einem sich nach unten erstreckenden, länglichen Endteil (15), das in eine zu diesem Zweck in dem Fahrradträger (3) geschaffene Aufnahmeöffnung (17) aufgenommen werden kann, lösbar gekoppelt werden kann, und der Fahrradträger (3) sich an einer Anhängerkupplung eines Motorfahrzeugs befestigen lässt, und dass
besagter Klemmkörper (5) sich um ein Rahmenrohr (7), das sich zwischen der Sattelstange (8) und dem Achsgehäuse (9) des Fahrrads (2) erstreckt, anbringen lässt.

2. Klemmvorrichtung (1) nach Anspruch 1, **dadurch gekennzeichnet, dass** der Ständer (4) an seiner Unterseite mit einem länglichen Führungselement (10) versehen ist, das sich in eingeklemmtem Zustand in Längsrichtung eines Fahrrads (2) erstreckt und das zumindest an seinen äußeren Enden mit Radhalterungsrinnenteilen (6) zur Aufnahme der jeweiligen Räder (11) eines einzuklemmenden Fahrrads (2) versehen ist.

3. Klemmvorrichtung (1) nach Anspruch 2, dadurch**gekennzeichnet, dass** das Führungselement zwei sich von dem Ständer erstreckende, hohle Querarme (10) umfasst, um darin jeweilige Verlängerungsstücke (12), von denen jedes an seinem freien äußeren Ende ein Radhalterungsrinnenteil (6) trägt, gleitend aufzunehmen.

4. Klemmvorrichtung (1) nach einem der obigen Ansprüche, **dadurch gekennzeichnet, dass** sie mit zumindest einem Fuß (13) versehen ist, der auf einer horizontalen Oberfläche aufstützen kann.

5. Klemmvorrichtung (1) nach Anspruch 4, **dadurch gekennzeichnet, dass** der zumindest eine Fuß (13) mit einem plattenförmigen Teil (14) versehen ist, das auf einer horizontalen Oberfläche aufstützen kann und sich quer zu diesem Fuß (13) erstreckt.

## Revendications

1. Dispositif de serrage (1) pour une bicyclette (2), comprenant un montant (4) pourvu de moyens de serrage (5, 6) pour serrer la bicyclette (2), les moyens de serrage comprenant un corps de serrage (5) à arranger autour d'un tube de cadre (7) de la bicyclette (2) à serrer, ledit dispositif de serrage (1) pouvant être placé sur une surface horizontale, et lesdits moyens de serrage (5, 6) étant aptes à serrer la bicyclette (2) dans le dispositif de serrage (1) dans une situation dans laquelle le dispositif est placé sur une surface horizontale, **caractérisé en ce que**:
le montant (4) peut être couplé d'une façon détachable sur un support de bicyclette (3) au moyen d'une pièce d'extrémité allongée s'étendant vers le bas (15) afin de permettre la réception de cette pièce d'extrémité (15) dans une ouverture de réception (17) ménagée à cet effet dans le support de bicyclette (3), le support de bicyclette (3) pouvant être fixé à un crochet de remorquage d'un véhicule à moteur, et **en ce que**:
ledit corps de serrage (5) peut être arrangé autour d'un tube de cadre (7) s'étendant entre le tube porte-selle (8) et le logement de l'axe de pédalier (9) de la bicyclette (2).

2. Dispositif de serrage (1) suivant la revendication 1, **caractérisé en ce que** le montant (4) est pourvu sur sa face inférieure d'un élément de guidage allongé (10) qui, dans la situation serrée, s'étend dans la direction longitudinale d'une bicyclette (2) et qui est pourvu au moins sur ses extrémités extérieures de tronçons de gorge de roue (6) destinées à recevoir les roues respectives (11) d'une bicyclette (2) à serrer.

3. Dispositif de serrage (1) suivant la revendication 2, **caractérisé en ce que** l'élément de guidage comprend deux bras transversaux creux (10) s'étendant à partir du montant afin de recevoir en eux d'une façon glissante des pièces d'extension respectives (12) portant chacune une partie de gorge de roue (6) sur leur extrémité extérieure libre.

4. Dispositif de serrage (1) suivant l'une quelconque des revendications précédentes, **caractérisé en ce qu'**il est pourvu d'au moins un pied (13) capable de prendre appui sur une surface horizontale.

5. Dispositif de serrage (1) suivant la revendication 4, **caractérisé en ce que caractérisé en ce que** le au moins un pied (13) présente une partie en forme de plaque (14) capable de prendre appui sur une surface horizontale et s'étendant transversalement par rapport à ce pied (13).
